# EUROPEAN PATENT SPECIFICATION

(11) **EP 2 762 402 B1**
(45) Date of publication and mention of the grant of the patent: **22.03.2023**
(21) Application number: 14397504.3
(22) Date of filing: 23.01.2014
(51) Int. Cl.: B63H 20/00, B63H 20/28

(54) **Propulsion arrangement for a vessel**
Vortriebanordnung für ein Schiff
Propulsion pour navire

(30) Priority: 30.01.2013 FI 20135087
(43) Date of publication of application: 06.08.2014
(73) Proprietor: Tamminen, Antti, 00250 Helsinki (FI); Suomi, Timo, 01380 Vantaa (FI); Savolainen, Jari, 00250 Helsinki (FI)
(72) Inventor: Tamminen, Antti, 00250 Helsinki (FI); Suomi, Timo, 01380 Vantaa (FI); Savolainen, Jari, 00250 Helsinki (FI)
(74) Representative: Heinonen & Co

(56) References cited:
- EP-A1- 0 590 867
- DE-A1- 10 000 578
- DE-A1-102007 016 380
- FR-A1- 2 823 177
- US-A1- 2012 083 173

## Description

### FIELD OF THE INVENTION

The invention relates to a boat propeller arrangement, and, in particular, the invention relates to a propeller driven by an electric motor.

### BACKGROUND OF THE INVENTION

The outboard motors of boats are usually two-stroke or four-stroke Otto engines. In these kinds of solutions, the motor is placed inboard or at the rear end of the boat, and the power produced by the motor is transmitted to the propeller by a transmission. When gasoline or diesel driven, these motors are usually high-polluting and loud. Besides, the use of gasoline, which is a non-renewable resource, makes boating expensive and environmentally detrimental.

Other solutions for driving a boat propeller are also known from the prior art. Electric outboard motors are environmentally friendly because they are silent and nonpolluting. However, since electric outboard motors have been relatively ineffective so far, they have only been used with very small boats or inflatable boats, for example.

KR20110051894A describes a propeller driven by a permanent magnet synchronous motor. In this solution, the stator consists of an arm and a magnet frame. If current is applied to the winding, the magnet frame is magnetized, and the magnetic force thus created by the stator rotates the surrounding rotor comprised of barrels and a blade. The permanent magnet is integrated with the rotor.

However, the solution disclosed by this patent specification has drawbacks. It is known that, in an electric motor, any motor power losses are converted into heat in the different parts of the motor. The temperature increase in the stator windings significantly contributes to the current heat losses because the resistance of the windings increases along with the increase of the motor temperature. The current heat loss of the stator is directly proportional to the square of the load current and to the resistance of the stator winding, which, as the load increases, very quickly raises the motor temperature too high. This is the cause of the ineffectiveness of the electric motors, which has significantly prevented the electric motors from becoming more popular in boating.

The above-mentioned patent specification does not solve the motor heating problem, and, consequently, the efficiency of the motor may drop significantly as the motor is heated up, which may make the solution unreliable in function, or, at least, considerably shorten its life.

DE10000578 A1 discloses a cooling unit comprising an opening arranged in the propeller hub. The inlet pipe is fastened to a hollow shaft (7), and warmed up cooling water flows from there over radial drillings (14) and by the expiration pipe (5) by means of centrifugal force to the discharge openings (6).

Document FR 2 823 177 A1 discloses a boat propeller arrangement comprising all the features of the preamble of claim 1.

### SUMMARY OF THE INVENTION

The objective of the present invention is to provide a solution eliminating or alleviating the above-mentioned drawbacks. Especially, the invention aims at solving how to enhance the energy efficiency of an electric motor.

The objectives of the invention are achieved by means of the features defined in the independent claim 1. The boat propeller arrangement according to the invention is characterized by what is set forth in the characterizing part of claim 1.

According to the present invention, the boat propeller arrangement comprises a stator and a rotor arranged within each other around the propeller hub, on the outer surface of which rotor propeller blades are provided, wherein a tunnel is created through the propeller hub to allow water to flow through the tunnel for cooling the motor, and furthermore, cooling ribs are also arranged in the tunnel in order to further enhance the heat transfer from the stator to the water.

According to an embodiment, the stator is wound, and, according to another embodiment, at least one pair of permanent magnets is connected to the rotor.

According to an embodiment, the rotor is arranged around the stator.

According to still another embodiment, the stator is provided on a thermally conductive surface to enhance the cooling.

Preferred embodiments of the present invention are also described in the dependent claims.

The utility of the boat propeller arrangement according to the present invention arises from a number of things. The combination of the motor and the propeller enhances the efficiency of the propeller arrangement because no separate transmission is needed in the motor. By using, for example, a permanent magnet synchronous motor arranged in connection with the propeller, as the motor, a high energy-efficiency can be achieved without any transmission energy-loss. The use of permanent magnets in the motor is also preferable because it eliminates the need of magnetizing current, which may enhance the energy efficiency of the motor, and there are very efficient permanent magnets commercially available on the market.

The present invention may result in a high power density, which may allow the propeller arrangement according to the present invention to be used on racing boats as well. Further, the present invention can be widely applied to other boats, such as to boats in the size range 2 to 20 m.

Thanks to the electric motor, the propeller arrangement is silent and low-emissive, which makes the propeller arrangement more environmentally friendly. Moreover, the present invention may result in energy savings because no separate cooling is needs to be arranged in the motor.

The cylindrical structure of the tunnel created through the propeller hub allows for efficient cooling of the stator, and the cooling ribs added into the tunnel may enhance it further. This makes it possible to reach an optimal end result for the mass-to-volume ratio of the motor. Besides, the thermally conductive connection of the propeller to the permanent magnet motor may provide additional cooling for the rotor, which may further enhance the cooling of the motor. The motor cooling according to the present solution can be efficient, by cooling the motor both inside and out, and it is possible to arrange any parts of the motor, such as the rotor and the stator, in such a way that the cooling medium, which usually is water, does not reach the windings of the stator or the permanent magnets of the rotor.

Besides, since the control of the motor can be implemented by means of a reduced-order observer, the present invention does not require any sensors that can be expensive and easy-to-fail, which may make the present arrangement more inexpensive to manufacture and more reliable in function.

### BRIEF DESCRIPTION OF THE FIGURES

In the following, the preferred embodiments of the invention will be described in more detail with reference to the accompanying figures in which
Figure 1 is a perspective view of a propeller arrangement according to an embodiment of the present invention,
Figure 2 is a side view of the propeller arrangement of figure 1,
Figure 3 is a top view of the propeller arrangement of figure 1,
Figure 4 is a cross-section view of a propeller arrangement according to an embodiment of the present invention.

### DETAILED DESCRIPTION OF THE EMBODIMENTS

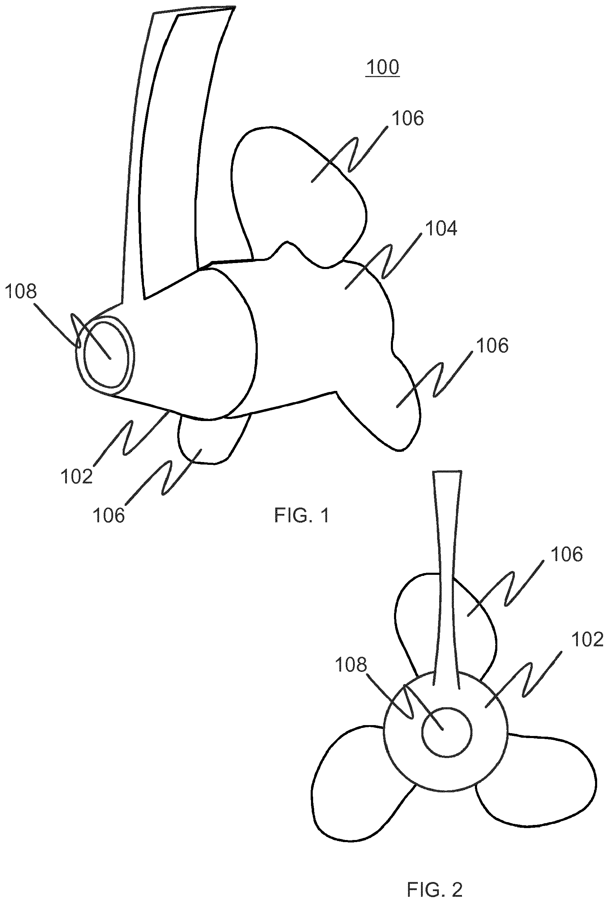

Figures 1 to 3 are a perspective view and a side view of a propeller arrangement according to an embodiment of the present invention, respectively. The propeller arrangement 100 includes a propeller and an electric motor connected thereto, the stator 102 and the rotor 104 of which electric motor are arranged around the propeller hub and around the stator, respectively. Propeller blades 106 are fixed to the outer surface of the rotor 104 with the result that the rotation of the rotor moves the propeller blades without any separate power transmission. A tunnel 108 is created through the propeller hub to allow water to flow through the tunnel for efficient cooling of the stator 102.

In the present invention, the stator and the rotor are installed within each other in such a way that the rotor is able to rotate freely. According to a preferred embodiment, the rotor is arranged around the stator, as shown in figures 1 to 3. According to another embodiment, the stator is arranged around the rotor, and the rotor is longer than the stator, with the propeller blades fixed to the rotor extending outside the stator.

The shape and size of the tunnel 108 created through the stator may vary depending on the embodiment. The length of the tunnel depends on the embodiment and the magnitude of the powers required from the motor. It will be understood by a person skilled in the art that the cooling requirements grow along with the power of the motor. The length of the tunnel can be approximately 5 cm to 3 m, more preferably approximately 20 cm to 1 m, for example.

The size of the diameter of the tunnel and the shape of the tunnel may also vary depending on the embodiment and the power desired for motor. According to an embodiment, the tunnel as an elongated, cylindrical structure, and the diameter of the tunnel can be approximately 50 mm to 1.5 m, more preferably approximately 0.5 m to 1 m, for example. In embodiments with some other than a cylindrical tunnel shape, the tunnel inlet and outlet can be of a different size in diameter. Depending on the embodiment, the tunnel can have the shape of a truncated cone or a droplet, for example, the latter being preferred because it efficiently displaces water. These tunnels are usually installed in the propeller arrangement in such a way that the mouths having a larger and a smaller diameter are the tunnel inlet through which water enters and the tunnel outlet through which water exits, respectively. According to an embodiment, the tunnel can also taper from the middle, the narrowest point of the tunnel thus being located somewhere else than at the ends of the tunnel, such as in the middle of tunnel.

According to an embodiment, cooling ribs are also arranged in connection with the tunnel in order to further enhance the heat transfer from the stator to the water. The cooling ribs are installed in connection with the tunnel in a way allowing the water flowing through the tunnel to effectively absorb heat from the cooling ribs. The installation of the ribs can be, for example, such that some of the ribs extend exposed on the inner surface of tunnel, thus enabling a more efficient heat transfer from the cooling ribs to the water. The cooling ribs are preferably made of a very thermally conductive material, such as aluminum. The cooling ribs being part of the prior art, their structure and operation will not described herein in more detail.

Because, when in use, the propeller arrangement is entirely submerged, the motor is effectively cooled on the outside by the surrounding water as well. The propeller blades 106 are fixed to the rotor in such a way that an effective heat transfer to the surrounding water through them is possible.

The electric motor used in the propeller arrangement according to the present invention is preferably a permanent magnet synchronous motor but other types of electric motors, which include but are not restricted to brushless direct current motors or reluctance motors, can also be used in the invention.

As mentioned above, the propeller blades 106 are provided on the outer surface of the rotor 104. The number, size and pitch of the propeller blades can vary depending on the size, shape and intended use of the boat. However, blades are preferably fixed along the entire length of the rotor or at least to the center of the rotor. The propeller blades are preferably made of a material enhancing the cooling of the motor by effectively transferring the heat generated in the rotor to the water.

All appropriate battery systems are applicable in the arrangement according to invention as far as they meet the energy production requirements. Typically, any battery preferably having, for example, a capacity of approximately 2 to 100 kWh, can be used in the present arrangement. It will be understood by a person skilled in the art that especially the above-mentioned upper limit only is exemplary and not intended to restrict the invention in any way.

The desired motor power depends on the size of the boat that the motor arrangement is to be connected to. As stated above, the present propeller arrangement is widely applicable to boats of different sizes, such as to boats ranged in size from 2 m to 20 m, from small motor boats to racing boats. The propeller arrangement according to the invention can provide motors having power ratings, for example, from 10 kW to 750 kW, more preferably motors having power ratings, for example, from 30 kW to 500 kW, but it will be understood by a person skilled in the art that higher power ratings, such as thousands of kilowatts, can also be reached by adjusting the above-mentioned variables. Power ratings higher than these are usually temporary by nature and intended for racing lasting a few minutes, for example. The rpms of the motor according to the invention can also vary, depending on the embodiment, from 1,500 rpm to 10,000 rpm, for example.

The motor power is preferably adjusted, for example, by means of a frequency converter allowing for free frequency adjustment. The frequency converter can control the motor by adjusting the voltage and frequency, usually steplessly. The use of frequency converter being part of the prior art, it is unnecessary to describe it herein any further. It will be understood by a person skilled in the art that the speed adjustment can also be implemented in any other known way.

The right timing of the stator winding relative to the poles of the permanent magnet rotor is of great importance to the efficiency of the permanent magnet synchronous motor according to the preferred embodiment, and, according to an embodiment, it is possible to obtain real-time information on the position of the rotor as well as to accurately measure the magnetization state by means of a reduced-order observer without any sensors. As this embodiment measures the stator currents and/or voltages, these states do not need to be estimated in a motor model but the measured states are directly usable in the observer equations.

According to another embodiment, the adjustment of the motor is implemented by means of a rotor position sensor based on whose output information it is possible to adjust the stator winding. It will be understood by a person skilled in the art that the adjustment can also be implemented by combining these two embodiments.

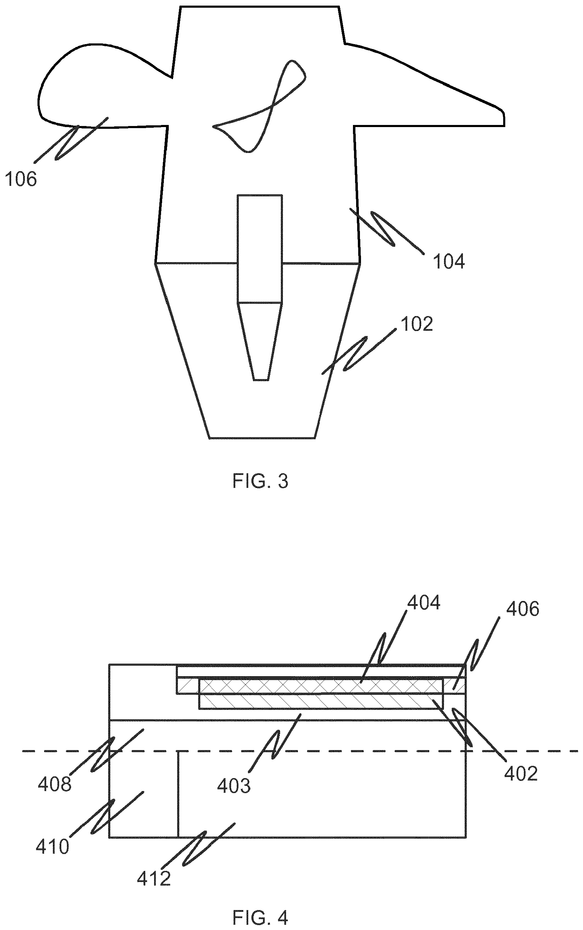

Figure 4 is a cross-section view of an exemplary structure of an embodiment of the propeller arrangement according to the present invention. A stator and a rotor according to the present invention are fixed to the propeller frame 410, around the propeller hub 412. According to a preferred embodiment, a winding 402 required by an electric motor is arranged in the stator of the propeller arrangement. The stator winding is preferably a three-phase winding but the stator can also be wound in some other way.

The stator core 403 is preferably made of a very thermally conductive, durable material, such as aluminum or magnesium. The gap 406 between the stator and the rotor is preferably provided with bearings and sealed to prevent water and dirt from entering. As stated above, according to the invention, the stator is also provided with cooling ribs to enhance the heat transfer from the stator to the water. A cooling tunnel 408 is created through the propeller for internal cooling of the stator.

To the rotor, instead, permanent magnets 404 are connected, the pole pairs created by the permanent magnets being at least two in number. It will be understood by a person skilled in the art that the pole pair number of the motor is not restricted to two but the number of the permanent magnets connected to the rotor is increased to correspond to the desired rpm. Thus, the pole pair number of the permanent magnets of the rotor can be two or any of its multiples, such as eight.

The permanent magnets connected to the rotor can be any permanent magnets commercially available on the market, such as magnets made of rare earth metals, including, for example, neodymium, praseodymium, samarium, gadolinium, dysprosium, or of other elements, including, for example, ferrite, iron, cobalt, steel, aluminum or nickel, or of mixtures thereof, such as a neodymium-iron-boric-magnet, or some other element combination.

The permanent magnets to be connected to the rotor are preferably chosen to match the desired torque of the motor in their magnetic force. The torque also depends on the pole pair number of the motor and the distance between the magnets and the rotation axis. These variables are chosen to achieve the desired efficiency for the propeller arrangement according to the present invention.

The permanent magnets can be placed on the rotor in many different ways, including, for example, embedding and surface-mounting, and the magnets can be arranged in a peripheral, tangential or V-shaped, symmetrical or asymmetrical, configuration. It will be understood by a person skilled in the art that the placing of the permanent magnets on the rotor is not restricted to the above-mentioned examples but the permanent magnets can also be placed on the rotor in some other way.

The above only describes some embodiments of the solution according to the invention. Naturally, many modifications to the inventive idea, such as to the implementation details and ways of application, are contemplated within the scope of the invention defined by the claims.

## Claims

1. A boat propeller arrangement (100) comprising
a stator (102) and a rotor (104) arranged within each other around the propeller hub (412), so that said rotor is arranged around said stator, on the outer surface of which rotor (104) propeller blades (106) are provided,
wherein a tunnel (108) is created through the propeller hub (412) for allowing water to flow through the tunnel (108) for cooling the motor, **characterized in that** cooling ribs are also arranged in the tunnel in order to further enhance the heat transfer from said stator to the water.

2. A propeller arrangement (100) as defined in claim 1, wherein the motor winding is arranged in the stator (102).

3. A propeller arrangement (100) as defined in any of the preceding claims, wherein the pole pairs of the permanent magnets (404) connected to the rotor (104) are at least two in number.

4. A propeller arrangement (100) as defined in any of the preceding claims, wherein the stator (102) is provided on a thermally conductive surface to enhance the cooling.

5. A propeller arrangement (100) as defined in any of the preceding claims, wherein the length of said tunnel (108) is at least 20 cm.

6. A propeller arrangement (100) as defined in any of the preceding claims, wherein said tunnel (108) is droplet-shaped.

7. A propeller arrangement (100) as defined in any of the preceding claims, wherein the control of the motor is implemented by means of a reduced-order observer to increase the efficiency.

## Patentansprüche

1. Bootspropelleranordnung (100), die Folgendes umfasst:
einen Stator (102) und einen Rotor (104), die ineinander um die Propellernabe (412) so angeordnet sind, dass der Rotor um den Stator angeordnet ist, wobei auf der Außenseite des Rotors (104) Propellerblätter (106) bereitgestellt werden,
wobei ein Tunnel (108) durch die Propellernabe (412) erzeugt wird, um zu ermöglichen, dass Wasser zum Kühlen des Motors durch den Tunnel (108) strömt, **dadurch gekennzeichnet, dass**
Kühlrippen ebenfalls in dem Tunnel angeordnet sind, um die Wärmeübertragung von dem Stator zu dem Wasser weiter zu steigern.

2. Propelleranordnung (100) nach Anspruch 1, wobei die Motorwicklung in dem Stator (102) angeordnet ist.

3. Propelleranordnung (100) nach einem der vorhergehenden Ansprüche, wobei die Polpaare der Dauermagneten (404), die mit dem Rotor (104) verbunden sind, mindestens zwei an der Zahl sind.

4. Propelleranordnung (100) nach einem der vorhergehenden Ansprüche, wobei der Stator (102) auf einer wärmeleitfähigen Fläche bereitgestellt wird, um die Kühlung zu steigern.

5. Propelleranordnung (100) nach einem der vorhergehenden Ansprüche, wobei die Länge des Tunnels (108) mindestens 20 cm beträgt.

6. Propelleranordnung (100) nach einem der vorhergehenden Ansprüche, wobei der Tunnel (108) tropfenförmig ist.

7. Propelleranordnung (100) nach einem der vorhergehenden Ansprüche, wobei die Steuerung des Motors mit Hilfe eines Beobachters reduzierter Ordnung umgesetzt wird, um den Wirkungsgrad zu erhöhen.

## Revendications

1. Ensemble d'hélice de bateau (100) comprenant :
un stator (102) et un rotor (104) agencés l'un dans l'autre autour du moyeu d'hélice (412), de telle façon que ledit rotor est disposé autour dudit stator, des pales d'hélice (106) étant disposées sur la surface extérieure dudit rotor (104),
dans lequel un tunnel (108) est créé à travers le moyeu d'hélice (412) pour permettre à de l'eau de s'écouler à travers le tunnel (108) afin de refroidir le moteur, **caractérisé en ce que**
des nervures de refroidissement sont également agencées dans le tunnel pour améliorer davantage le transfert de chaleur dudit stator à l'eau.

2. Ensemble d'hélice (100) selon la revendication 1, dans lequel l'enroulement de moteur est agencé dans le stator (102) .

3. Ensemble d'hélice (100) selon l'une quelconque des revendications précédentes, dans lequel les paires de pôles des aimants permanents (404) reliés au rotor (104) sont au moins au nombre de deux.

4. Ensemble d'hélice (100) selon l'une quelconque des revendications précédentes, dans lequel le stator (102) est disposé sur une surface thermoconductrice pour améliorer le refroidissement.

5. Ensemble d'hélice (100) selon l'une quelconque des revendications précédentes, dans lequel la longueur dudit tunnel (108) mesure au moins 20 cm.

6. Ensemble d'hélice (100) selon l'une quelconque des revendications précédentes, dans lequel ledit tunnel (108) est en forme de goutte.

7. Ensemble d'hélice (100) selon l'une quelconque des revendications précédentes, dans lequel la commande du moteur est réalisée au moyen d'un témoin d'ordre inférieur destiné à augmenter l'efficacité.
